# EUROPEAN PATENT APPLICATION

(11) **EP 3 029 308 A1**
(43) Date of publication of application: **08.06.2016**
(21) Application number: 15003397.5
(22) Date of filing: 27.11.2015
(51) Int. Cl.: F02M 37/00, F02D 41/38, F02M 21/02, F02M 21/06, F02M 31/08, F02M 31/14, F02M 31/18, F02M 31/20

(54) **DRIVE SYSTEM WITH FUEL EVAPORATION DEVICE**

(30) Priority: 28.11.2014 DE 102014017670
(71) Applicant: Smbatyan, Marlen, 0015 Yerevan (AM); Ghazaryan, Seryozha, 1103 Echmiadzin (AM)
(72) Inventor: Smbatyan, Marlen, 0015 Yerevan (AM); Ghazaryan, Seryozha, 1103 Echmiadzin (AM)
(74) Representative: Grünecker Patent- und Rechtsanwälte PartG mbB

(57) **Abstract**

The invention refers to a drive system including an engine having a pressurizable fuel rail in fluid communication with the pressurizable fuel rail and at least one fuel injector for direct injection into at least one combustion chamber of a respective cylinder, a fuel tank, a fuel pump for conveying liquid fuel from the fuel tank for liquid fuel through a conduit to an evaporation device for transferring the fuel from a liquid to a gaseous state, a conduit for conveying the evaporated fuel to the fuel rail, an electromagnetic manometer for measuring the pressure in the fuel rail and for providing a control signal to the fuel pump, and an emergency valve functionally connected to the fuel rail to control an upper pressure limit in the fuel rail wherein the evaporation device comprises a heating chamber having a heating source and the at least one fuel injector is designed to inject fuel in the gaseous state directly into the combustion chamber of the respective cylinder. The invention also refers to a corresponding vehicle and the use of a kit in such a drive system.

## Description

The invention refers to a drive system including an engine having a pressurizable fuel rail and at least one fuel injector in fluid communication with the pressurizable fuel rail and for direct injection into at least one combustion chamber of a respective cylinder. The invention is thus practically used in combination with modern gasoline direct injection (GDI) engines, also known as petrol direct injection engines or direct petrol injection engines with spark ignited direct injection (SIDI) or fuel stratified injection (FSI). Such engines have a pressurizable fuel rail in which the fuel is pressurized to a certain extent before it is injected into the respective cylinders. The gasoline is injected directly into the combustion chamber of each cylinder, as opposed to conventional multi-point fuel injection that injects fuel into the intake tract or cylinder port. The engines could also be in addition of the Hemi or Turbo gasoline type.

Usually, the fuel is injected in the form of a spray containing fuel micro droplets. In some applications, gasoline direct injection enables stratified fuel charge (ultra lean burn) combustion for improved fuel efficiency, and reduced emission levels at low load. The fuel injection function and the ignition timing are regulated by an engine control unit or engine management system which affords fast controllers and very precise algorithms for good performance and drive-ability. The certain combustion modes (ultra lean burn, stoichoimetric, and full power output) are characterized by the air fuel ratio. Overall, direct injection engines perform rather well and provide for an enhancement in fuel efficiency and reduction of emissions. However, there always was, and still exists, the goal to improve such drive systems for reduction of emissions as well as fuel consumption.

In order to achieve such a result, the drive system includes an engine having a pressurizable fuel rail, a fuel tank, a fuel pump for conveying liquid fuel from the fuel tank through a conduit to an evaporation device for transferring the fuel from a liquid to a gaseous state, a conduit for conveying the evaporated fuel to the fuel rail, an electromagnetic manometer for measuring the pressure in the fuel rail and for providing a control signal to the fuel pump, and an emergency valve functionally connected to the fuel rail to control an upper pressure limit in the fuel rail, where the evaporation device comprises a heating chamber having a heating source and at least one fuel injector is designed to inject fuel in the gaseous state directly into the combustion chamber of the respective cylinder.

Usually, the pressure level in the fuel rail may vary in the range of 4.5 atm to 10 atm (4.56 bar to 10.13 bar). Which pressure level is actually chosen, depends on the power of the engine - the more powerful the engine, the higher the pressure level would be.

The advantages of such a drive system are a reduction in the emissions and an improvement, which means a lowering, of the fuel consumption. Overall it is also possible to gain an enhancement of the acceleration provided for by the drive system. It also reduces the detonation of the engine. This is mainly a result of the injection of the fuel in a gaseous state into the cylinder which means that the fuel is present in the fuel rail in a gaseous state and is transferred from its liquid state to the gaseous state outside the fuel rail. The emergency valve secures the flow-back of the fuel excess from the fuel rail to the tank and will open, when the pressure exceeds an upper pressure limit (fixed pressure level) in the fuel rail. Thereafter, the level of pressure is decreased by releasing the fuel from the fuel rail and guiding the fuel back to the tank. The fuel is liquid at 20°C and 1 atm.

The drive system ensures that the initial liquid fuel is subsequently burnt in the form of gas. This will reduce emissions because the fuel burns better in the gas condition. Efficient combustion leads to less emission. This results in a reduction in the consumption of fuel as well. This is mainly because the volume of the fuel in the gas condition is larger than in the liquid condition. From a larger volume, the quantity of the fuel used to burn a certain volume of fuel is reduced. As a further result, staining of the motor oil is reduced and so the life of the motor oil is increased.

The evaporation device comprises a heating chamber having a heating source. Actually, the fuel is boiled in the heating chamber, to transfer from the liquid state to the gaseous state. The time needed for this process depends mainly on the power of the heating source. There are several possibilities for providing such a heating source, for example, it could be powered by electricity, combustion, etc. The engine comprises at least one fuel injector designed to inject fuel in the gaseous state into the respective cylinders of the engine. Dependent on the construction of the drive system, the fuel injectors may also be able to inject a fuel spray. This might be important if the system does not have an initial heating up system. Usually, it will take a certain time until the proper conversion from the liquid into the gaseous state of the fuel takes place and the necessary temperature within the evaporation device is reached. In the time spent there between, the fuel may be injected in semi-gaseous state, fuel gas plus fuel micro droplets (similar to micro-droplets in a spray of fuel, as used in modern injector engines). A heating up system, preferably electrically powered, may reduce this time spent which usually takes approximately seven to fifteen minutes after ignition of the engine. Existing modern injectors might sufficiently work in such a system.

In the preferred embodiment, a return conduit is provided between the emergency valve and the tank to return excess of fuel from the fuel rail to the tank. In order to reduce the risk in such a return, a cooling system might be provided, which is functionally connected to the return conduit to cool the excess of fuel to a certain degree before returning it to the tank. Preferably, the cooling system is designed as such that it cools down the excess of fuel to return it in liquid form to the tank. This also assures that the temperature of the fuel is reduced such that it can be returned into the tank without any danger.

In one embodiment the evaporation device includes a barrel which surrounds the exhaust pipe and extends a certain length along the exhaust pipe so that the heating chamber is formed between the outer surface of said certain length of the exhaust pipe and the inner surface of the barrel. The heat is emitted from the exhaust pipes outer surface directly into the heating chamber. Thus a simple and cost saving construction is given.

Preferably, the heating chamber has a substantially annular square section extending around the respective portion of the exhaust pipe. The exhaust pipe outer surface within the heating chamber can thus emit heat directly into the heating chamber. At best the exhaust pipe can be centred within the barrel (extending co-axial therethrough) to gain an even heat distribution.

Preferably, the heating source is the emissions from the engine. This means that the exhaust gases from the engine are used to heat up the fuel in order to transfer it from the liquid into the gaseous state. Advantageously, the evaporation device can be constructed like a heat exchanger whereby the heating chamber is attached to the exhaust pipe, preferably to the first part of the silencer. The part of the exhaust pipe nearer to the engine is the hottest one, especially around the first part of the silencer and, therefore, this is a good region to install the evaporation device. This assures that a sufficient amount of fuel can be transferred from the liquid into the gaseous state even under high load conditions of the engine.

In order to prevent a backflow of the gaseous fuel into the tank, a one-way entrance valve may be provided in flow communication with the heating chamber, so that fuel may flow into the evaporation device through an entrance portion but cannot flow out again through the same portion.

Preferably, the evaporation device may include a barrel forming the heating chamber which surrounds a part of the exhaust pipe. The barrel simply surrounds the exhaust pipe, so that heat may be transferred into an annular heating chamber which increases efficiency. The exhaust gases shall not come into contact with the fuel.

In a further embodiment, the electromagnetic manometer might be designed such that it provides for a first signal for triggering the switch off of the fuel pump at a first pressure value and a second signal for triggering the turning on of the fuel pump at a second pressure value which is lower than the first pressure value. This assures that there is always a sufficient pressure level within the fuel rail and, thus, an optimized injection into the respective cylinders.

In order to increase the lifespan of the evaporation device, the barrel is preferably made out of stainless steel.

In order to provide a stable system and to gain sufficient safety for it, the tank and the evaporation device as well as the evaporation device and the fuel rail may be in flow by use of metallic pipes. Especially the heated fuel and the temperature needed communication could be better coped with metallic pipes.

The invention further refers to a vehicle having a drive system according to one of claims 1 to 12.

The drive system usually does not afford a reconstruction of the usual direct injection engines; rather the structural modification can be regarded as minor modifications, which could also be carried out later on by trained practitioners. The invention does, therefore, also refer to the use of a kit in a drive system according to one of claims 1 to 12, the kit including an evaporation device, a conduit for conveying evaporated fuel from a tank to the evaporation device, an electromagnetic manometer for measuring the pressure in a fuel rail and for providing a control signal to a fuel pump, and an emergency valve functionally connected to a fuel rail to control an upper pressure limit in a fuel rail.

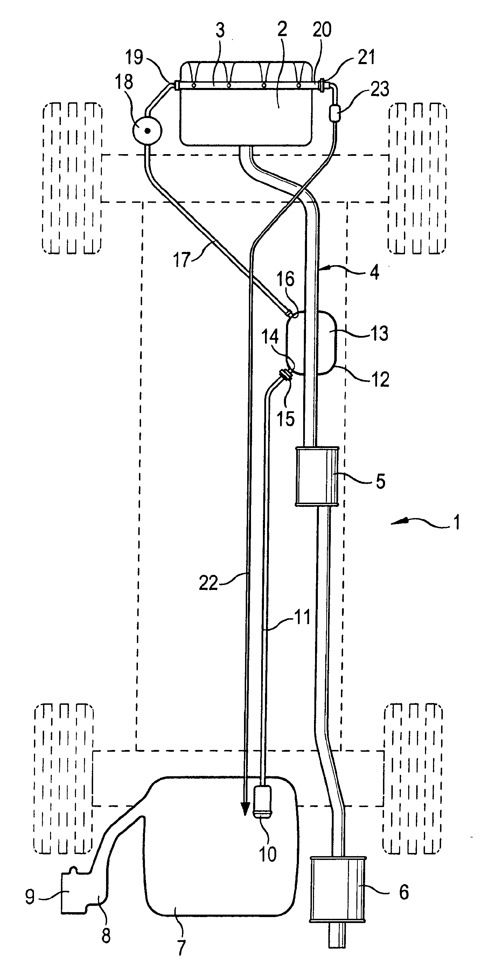

In the following, an embodiment of the present invention is described by use of a drawing. The drawing is a schematic sketch from the underside of an automobile including the drive system, whereby only the most important elements are shown.

The drawing only indicates an automobile 1 from the underside and only the most important elements of the invention are schematically drawn in full line. The automobile 1 has a combustion engine 2 which is of the gasoline direct injection type (GDI) (also known as petrol direct injection or direct petrol injection or spark ignited direct injection (SIDI) or fuel stratified injection (FSI)). The engine 2, therefore, includes a fuel rail 3, in which the fuel is highly pressurized and injected directly into the combustion chamber of each cylinder (not shown). Attached to the engine 2 is also an exhaust pipe 4 having two exhaust silencers 5, 6.

The automobile 1 is also provided with fuel a tank 7 arranged at the rear of the automobile 1 having a filler pipe 8 and a filler cap 9. Attached to the fuel tank 7 is an electric fuel pump 10 which, upon activation, conveys fuel out of the fuel tank 7 in the direction to the engine 2. Attached to the fuel pump is a metal pipe 11, the metal could be aluminum, copper or stainless steel. The metal pipe 11 connects the fuel pump 10 with a small barrel 12. This position of the barrel 12 is chosen because of the high temperature of the exhaust gases in this area. The barrel 12 is preferably made out of stainless steel and surrounds the front part of the exhaust pipe 4, so that an annular chamber 13 is formed by the barrel 12. Various possibilities exist for constructing the barrel 12 and the corresponding portion of the exhaust pipe 4. For example, the barrel 12 and this part of the exhaust pipe 4 could form a unit made out of stainless steel which can be attached easily to the other portions of the exhaust pipe 4. The barrel 12 is cylindrical (or at least circular in section) and a certain length of the exhaust pipe 4 is extending co-axially therethrough to create the annular heating chamber 13.

To the inlet 14 of the barrel 12 a one-way valve 15 is attached which prevents outflow of fuel through the inlet 14 and allows only inflow of fuel into the barrel 12. The volume of chamber 13 might be, in this example, approximately one liter.

Barrel 12 also has an outlet 16. Attached to the outlet 16 is another metal pipe 17. The metal used could be aluminum, copper or stainless steel. A helical winding of the metal pipe might also be preferred. Metal pipe 17 connects to the barrel 12 with the fuel rail 3. An electromagnetic manometer 18 is connected to the metal pipe 17 and, thus, with the fuel rail 3 to measure the pressure within the metal pipe 17 and the fuel rail 3. The electromagnetic manometer 18 is either electrically connected directly to the high pressure fuel pump 10 or to the engine control system which also controls the fuel pump 10.

The fuel rail 3 does not only have an inlet 19 connected to the metal pipe 17, but also an outlet 20 to which an emergency valve 21 is attached. The emergency valve 21 might be mechanically or electronically controlled. It will open upon a predetermined pressure limit within the fuel rail 3 being exceeded. A return pipe 22 is connected to the emergency valve 21 and returns excessive fuel into the fuel tank 7. The return pipe 22 could also be a hose or made out of metal, like aluminum, copper or stainless steel. Attached to the return pipe 22 is a cooling system 23, which cools down the fuel exiting the fuel rail 3 to a predetermined extent so that it is sufficiently cooled if returned to the tank 7. The cooling system could function in several ways and also the cooling medium can be selected according to the cooling capacity.

In the following, the function and effectiveness of the above described drive system will be explained in detail.

The fuel pump 10 pumps fuel via the metal pipe 11 and the one-way valve 15 into the barrel 12. Approximately after seven to fifteen minutes subsequent to ignition of the engine 2, the barrel 12 reaches its operating temperature. This is due to the hot exhaust gases flowing through the exhaust pipe 4 out of the engine 2. It might also be possible to install additional heating means to shorten the heating up period of the barrel 12. The engine 2 is, however, constructed such that it can also inject fuel in a usual manner as normal in direct injection engines. The fuel reaching the chamber 13 within the barrel 12 evaporates, which means it boils and is transferred from the liquid into the gaseous state. This increases the volume of the fuel to a large extent. The barrel 12, which could also be named an evaporation device, is attached to the first part of the exhaust pipe 4 because the operating temperature at this part is the highest which means the barrel 12 is placed nearer to the engine 2 as to the outlet end of the exhaust pipe 4. The exact location may depend on the temperature window which is most efficient for the evaporating purpose.

The one-way valve 15 is constructed such that it prevents a backflow of fuel in the liquid and gaseous state. The fuel in the gaseous state is then transferred via outlet 16 and metal pipe 17 to the inlet 14 of the fuel rail 3. The electromagnetic manometer 18 measures the pressure in this region, especially in the fuel rail 3, so that a predetermined pressure window is maintained. In the given example, the pressure range selected is 5 to 7 atm (5,07 bar to 7,09 bar). This means that the fuel pump 10 will operate until the electromagnetic manometer 18 detects 7 atm. It will then provide for a signal so that the fuel pump 10 will be switched off. Once the pressure detected by the electromagnetic manometer 18 decreases to the minimum level of 5 atm, the electromagnetic manometer 18 will send a signal and the fuel pump 10 will switch on again. The pressure levels might be adjustable by the motor control and may also depend from the power of the engine 2.

The injectors (not shown) inject, according to the motor control, the fuel in the gaseous state into the respective cylinders of the engine 2. It is, thus, assured that the fuel is burned in the form of gas and not in the form of small droplets of liquid. This reduces the emissions due to better burning of the fuel and also reduces the consumption of fuel. This also has a positive influence on the motor oil consumption due to more efficient burning of the motor oil. In addition the cylinders and engine mechanical parts' lifetime is prolonged due to the more efficient operation of the engine. Plus, the noise of engine operation is reduced.

In order to keep the pressure in the fuel rail 3 within the predetermined range, the emergency valve 21 will open if the pressure exceeds 7 atm in the present example. The excess fuel in the gaseous and heated state will then be cooled down by the cooling system 23 so that the fuel once again becomes liquid. In the liquid state it will then be returned via the return pipe 22 to the tank 7.

### REFERENCE NUMBER LIST

- 1: automobile
- 2: combustion engine
- 3: fuel rail
- 4: exhaust pipe
- 5: exhaust silencer
- 6: exhaust silencer
- 7: fuel tank
- 8: filler pipe
- 9: filler cap
- 10: fuel pump
- 11: metal pipe
- 12: barrel
- 13: chamber
- 14: inlet
- 15: one-way valve
- 16: outlet
- 17: metal pipe
- 18: electromagnetic manometer
- 19: inlet
- 20: outlet
- 21: emergency valve
- 22: return pipe
- 23: cooling system

## Claims

1. Drive system including an engine (2) having a pressurizable fuel rail (3) and at least one fuel injector in fluid communication with the pressurizable fuel rail (3) and for direct injection into at least one combustion chamber of a respective cylinder, a fuel tank (7) for liquid fuel, a fuel pump (10) for conveying liquid fuel from the fuel tank (7) through a conduit (11) to an evaporation device for transferring the fuel from a liquid to a gaseous state, a conduit (17) for conveying the evaporated fuel to the fuel rail (3), an electromagnetic manometer (18) for measuring the pressure in the fuel rail (3) and for providing a control signal to the fuel pump (10), and an emergency valve (21) functionally connected to the fuel rail (3) to control an upper pressure limit in the fuel rail (3), wherein the evaporation device comprises a heating chamber (13) having a heating source and the at least one fuel injector is designed to inject fuel in the gaseous state directly into the combustion chamber of the respective cylinder.

2. Drive system according to claim 1, **characterized in that** a return conduit (22) is provided between the emergency valve (21) and the fuel tank (7) to return an excess of fuel from the fuel rail (3) to the fuel tank (7).

3. Drive system according to claim 1 or 2, **characterized in that** a cooling system (23) is functionally connected to the return conduit (22) to cool the excess of fuel to a certain degree before returning it into the fuel tank (7).

4. Drive system according to claim 3, **characterized in that** cooling system (23) is designed such that it cools down the excess of fuel to return it in liquid form to the fuel tank (7).

5. Drive system according to claim 1-4, **characterized in that** the heating source is the emissions from the engine (2).

6. Drive system according to claim 5, **characterized in that** the evaporation device includes a barrel (12) which surrounds the exhaust pipe (4) and extends a certain length along the exhaust pipe (4) so that the heating chamber (13) is formed between the outer surface of said certain length of the exhaust pipe (4) and the inner surface of the barrel (12).

7. Drive system according to claim 5 or 6, **characterized in that** the heating chamber (13) has a substantially annular square section extending around the respective portion of the exhaust pipe.

8. Drive system according to claim one of 1 to 7, **characterized in that** the evaporation device is constructed like a heat exchanger, whereby the heating chamber (13) is attached to the exhaust pipe (4), preferably to the first part of the exhaust silencer (5).

9. Drive system according to one of claims 1 to 8, **characterized in that** the evaporation device includes a one-way entrance valve (15) in flow communication with the heating chamber (13).

10. Drive system according to one of the preceding claims, **characterized in that** the electromagnetic manometer (18) is designed such that it provides for a first signal triggering the switch off of the fuel pump (10) and a second signal triggering the turning on of the fuel pump (10) at a second pressure value which is lower than the first pressure value.

11. Drive system according to one of the claims 6 to 11, **characterized in that** the barrel (12) is made out of stainless steel.

12. Drive system according to one of the preceding claims, **characterized in that** the fuel tank (7) and the evaporating device as well as the evaporating device and the fuel rail (3) are in fluid communication by use of metallic pipes (11, 17).

13. Vehicle having a drive system according to one of claims 1 to 12.

14. Use of a kit in a drive system according to one of claims 1 to 12, the kit including an evaporation device, a conduit (11) for conveying evaporated fuel from a fuel tank (7) to the evaporating device, an electromagnetic manometer (18) for measuring the pressure in a fuel rail (3) and for providing a control signal to a fuel pump (7), and an emergency valve (21) functionally connected to a fuel rail (3) to control an upper pressure limit in a fuel rail (3), wherein the evaporation device comprises a heating chamber (13) having a heating source.
